# FASCICULE DE BREVET EUROPEEN

(11) **EP 1 362 012 B1**
(45) Date de publication et mention de la délivrance du brevet: **10.04.2019**
(21) Numéro de dépôt: 02704812.3
(22) Date de dépôt: 13.02.2002
(51) Int. Cl.: C03B 27/044, C03B 29/08

(54) **DISPOSITIF DE SOUFFLAGE D'UN FLUIDE SUR AU MOINS UNE FACE D'UN ELEMENT MINCE, ET UNITE DE SOUFFLAGE ASSOCIEE**
BLASVORRICHTUNG AUF WENIGSTENS EINER SEITE EINES DÜNNEN ELEMENTS UND DAZU GEHÖRENDES BLASELEMENT
DEVICE FOR BLOWING A FLUID ON AT LEAST A SURFACE OF A THIN ELEMENT AND ASSOCIATED BLOWING UNIT

(30) Priorité: 23.02.2001 FR 0102707
(43) Date de publication de la demande: 19.11.2003
(73) Titulaire: SAINT-GOBAIN SEVA, 71100 Chalon-sur-Saône (FR)
(72) Inventeur: BANCON, Georges, F-71100 Chalon-sur-Saône (FR); BRIS, Jean-Jacques, F-71620 Bey (FR); BONNAMOUR, François, F-71100 Chalon sur Saone (FR)
(74) Mandataire: Saint-Gobain Recherche
(86) Numéro de dépôt international: PCT/FR2002/000540
(87) Numéro de publication internationale: WO 2002/068349

(56) Documents cités:
- EP-A- 0 030 340
- EP-A- 0 581 742
- DE-A- 4 219 003
- US-A- 4 515 622
- US-A- 5 697 999

## Description

La présente invention concerne le domaine des dispositifs destinés au soufflage d'un gaz sur une surface en mouvement, telle qu'une matière en bande ; le soufflage peut-être réalisé soit sur une seule face soit sur les deux faces de la bande.

De tels dispositifs sont notamment utilisés dans le traitement thermique de bandes de matière tels que des bandes de verre, tissus, tôles ou autres matériaux.

Le soufflage précité permet un échange de chaleur (chauffage, refroidissement) de la bande qui est mobile par rapport au dispositif de soufflage. Préférentiellement, la bande est en mouvement et le dispositif de soufflage est fixe.

On connaît de nombreux dispositifs de ce type notamment des dispositifs de soufflage d'air chaud sur les deux faces d'une bande de verre en mouvement.

Ainsi, le brevet US 5 647 882 décrit une enceinte de traitement à travers laquelle défile une feuille de verre. Le soufflage d'air chaud a lieu sur les deux faces du verre grâce notamment à des ventilateurs associés à des moyens de chauffage et qui coopèrent avec des buses qui soufflent directement sur les deux faces de la feuille en défilement. L'ensemble est symétrique par rapport au plan de la feuille.

Les ventilateurs sont à flux tangentiel et ils sont fixés, à la fois au-dessus et au-dessous de la feuille, sur une paroi longitudinale de l'enceinte.

Cette disposition présente notamment l'inconvénient de ne pas souffler l'air de façon très homogène sur toute la surface du verre, et d'avoir un rendement aérolique médiocre à cause notamment des ventilateurs tangentiels.

On connaît aussi le brevet US 5 150 534 qui divulgue un autre arrangement d'éléments de soufflage sur les deux faces d'une bande en verre.

Cet arrangement présente un point central de symétrie, avec deux ventilateurs disposés « tête-bêche » au-dessus et deux ventilateurs également disposés « tête-bêche » au-dessous de la surface du verre.

Les ventilateurs sont à flux transversal et ils sont fixés sur les parois latérales de l'enceinte. Ces ventilateurs associés à des moyens de chauffage, alimentent en air chaud un ensemble de buses qui projettent l'air perpendiculairement au sens de défilement de la plaque en verre.

L'ensemble est complexe, de mise en oeuvre délicate car seul le fonctionnement simultané des quatre ventilateurs peut permettre une certaine homogénéité de la répartition des flux des deux côtés du verre.

Par ailleurs de tels ensembles sont difficiles à mettre en série sur des fours continus, à cause notamment des températures différentes générées par chaque ensemble.

Le document EP 864 519 enseigne un dispositif pour guider et stabiliser des bandes de façons flottantes en vue du traitement thermique avec une section de soufflage d'air. Ce dispositif comprend des buses à suspension et un ventilateur radial installé de sorte qu'il souffle dans un sens essentiellement parallèle au sens de circulation de la bande.

Par ailleurs, on connaît le document DE 4219003 selon lequel des ventilateurs fixés dans la paroi supérieure de l'enceinte de traitement, associés à des conduits et à une batterie de buses, permettent un soufflage d'air chaud sur l'une des faces de la bande de verre, grâce à au moins un ensemble de buses disposées parallèlement au sens de défilement de la bande de verre.

Cette orientation peut d'ailleurs induire des défauts dans le verre.

Par ailleurs, le fait que les buses projettent l'air, à un endroit donné, seulement sur l'une des faces du verre peut, créer des contraintes, des déformations, et autres défauts non souhaités.

Il apparaît donc souhaitable de concevoir un dispositif de soufflage d'air du type de ceux définis en tête de la description, qui pallie notamment aux inconvénients précités.

La présente invention présente une solution à la fois simple et fiable au problème de l'homogénéisation de la température du flux d'air qui balaie la (ou les deux) surfaces d'une bande de verre.

De plus, elle est de mise en oeuvre aisée.

En outre, la présente invention permet de créer des zones chauffes de dimensions limitées, avec des températures différentes, ce qui est utile notamment dans le cas d'application à des fours continus.

Ainsi la présente invention a pour objet un dispositif de soufflage d'un fluide sur au moins une face d'un élément mince de type bande comprenant, à l'intérieur d'une enceinte ayant un axe longitudinal horizontal (XX') correspondant à l'axe de défilement de la bande, au moins un ventilateur à flux radial et à axe vertical (ZZ') ayant au moins une sortie reliée à au moins un conduit d'alimentation de buses dirigées vers ladite face, les buses induisant des jets de fluide dans au moins un plan perpendiculaire au sens (XX') de défilement de ladite bande, ledit dispositif comprenant deux conduits diamétralement opposés, chaque conduit alimentant au moins une série de buses (43) parallèles transversales.

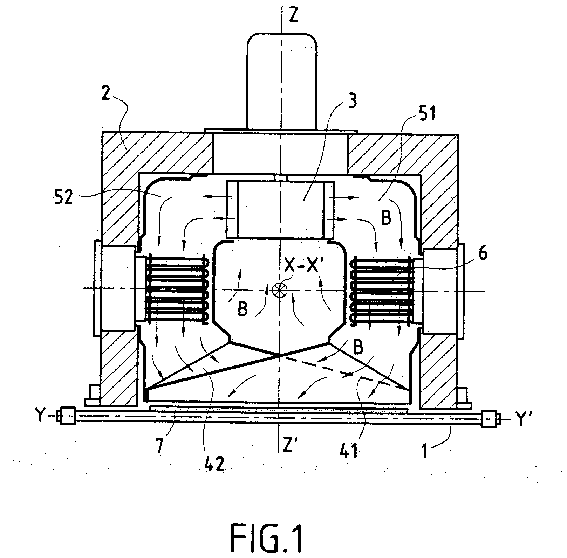

Conformément à l'invention, les buses induisent des jets de fluide dans au moins un plan perpendiculaire au sens (XX') de défilement de ladite bande, et l'axe (ZZ') dudit ventilateur est disposé généralement à proximité de l'axe longitudinal de l'enceinte. Généralement l'axe (ZZ') est perpendiculaire au sens (XX'). L'axe (ZZ') peut par exemple être distant de l'axe longitudinal de l'enceinte de moins de 35% de la largeur interne de l'enceinte, voire de moins de 25% de la largeur interne de l'enceinte. L'axe (ZZ') peut croiser l'axe longitudinal de l'enceinte, notamment lorsque le dispositif selon l'invention ne comprend, d'un côté de l'élément mince, dans une coupe transversale, qu'un seule ventilateur à deux sorties radiales (c'est le cas du dispositif de la figure 1).

Cette disposition caractéristique présente l'avantage d'une meilleure homogénéité du flux.

Le dispositif selon l'invention comprend deux conduits radiaux diamétralement opposés. Ces conduits peuvent alimenter chacun au moins une série de buses parallèles transversales, définies entre des plaques, et la section dudit conduit n'est pas constante.

Avantageusement, lesdites buses issues de chacun des conduits sont disposées de façon alternative selon l'axe longitudinal (XX') de l'enceinte ; le pas étant d'au moins une buse.

Cette disposition des buses, entremêlées, assure une bonne répartition du flux. Par ailleurs, si l'un des conduits d'alimentation est obstrué (incident), le flux arrive cependant régulièrement sur la surface, grâce à l'autre conduit qui amène le flux à l'autre série de buses.

Selon un mode de réalisation de l'invention, on prévoit un dispositif qui comprend un seul ventilateur ayant deux sorties radiales.

Conformément à un autre mode de réalisation de l'invention, il est envisagé deux ventilateurs ayant chacun une sortie radiale, et disposés selon les caractéristiques de la revendication 1.

Selon une caractéristique additionnelle de l'invention, la section du (ou des) conduit(s) d'alimentation des buses n'est pas constante.

Quelle que soit la forme de la bande en défilement, lesdites buses induisent des jets d'air dirigés perpendiculairement à la surface de l'élément mince en bande. Généralement, les buses ne sont pas jointives de sorte que l'air issu des buses peut circuler entre elles. Dans ce cas, les jets d'air issus des busent frappent l'élément mince de type bande et l'air peut revenir en arrière, circuler entre les buses et venir réalimenter le ventilateur.

De façon préférentielle, lesdites buses issues de chacun des conduits présentent une zone de recouvrement selon tout ou partie de la largeur de l'enceinte.

Le dispositif selon l'invention applique un traitement très homogène sur toute la largeur de l'élément mince. En effet, pour une buse donnée, le flux de fluide qu'elle éjecte n'a généralement pas exactement les mêmes caractéristique (vitesse et/ou température) à ses deux extrémités. Or dans le dispositif selon l'invention, les défauts d'homogénéité produit par une buse alimentée par l'un des conduits (51) sont immédiatement compensés par les mêmes défauts produits par une autre buse alimentée par l'autre conduit (52), du fait que ces conduit (51,52) sont disposés de façon alternative selon l'axe (X,X'). Le fait que les buses ne soient pas jointives concoure également à l'obtention d'une grande homogénéité, du fait que le fluide circule plus facilement.

La présente invention ne s'applique pas uniquement aux éléments minces plats. Ceux-ci peuvent être courbés, par exemple en forme de demi-cylindre.

En outre, dans le cas d'application au chauffage de bandes minces, le dispositif selon l'invention comprend des moyens de chauffage du fluide dans l'enceinte, tels que par exemple des résistances électriques ou des brûleurs à gaz.

Les moyens de chauffage peuvent être de type radiatif, avec par exemple une ou plusieurs résistance électrique.

Sans sortir du cadre de l'invention, le dispositif de soufflage peut être disposé sur les deux faces de la bande mince.

Par ailleurs, l'enceinte peut comprendre plusieurs ventilateurs alignés selon son axe longitudinal.

Ainsi, le dispositif selon l'invention comprend des moyens destinés à contrôler et à ajuster individuellement la température et/ou le débit du fluide issu de chaque ventilateur, afin d'avoir des profils de température particuliers au niveau du soufflage sur la bande mince.

L'invention vise par ailleurs une unité de soufflage d'un fluide sur les deux faces d'un élément mince de type bande, comprenant un dispositif de soufflage sur l'une des faces, associé à un autre moyen de soufflage et/ou de chauffe de type radiatif ou convectif sur l'autre face. Ladite autre face peut également être soumise à un transfert de chaleur par conduction (moyen conductif) ; c'est notamment le cas lorsque l'élément mince se déplace sous l'action de rouleau successifs, le contact entre l'élément mince et les rouleaux pouvant être à l'origine d'un transfert de chaleur par conduction des rouleaux vers l'élément mince ou inversement.

D'autres caractéristiques, détails et avantages de l'invention apparaîtront mieux à la lecture de la description qui va suivre faite à titre illustratif et nullement limitatif en référence aux dessins annexés sur lesquels :
- la figure 1 est une coupe transversale simplifiée d'un mode de réalisation de l'invention ;
- la figure 2 est une vue de dessus de l'invention, et
- la figure 3 est une coupe longitudinale simplifiée dudit mode de réalisation de l'invention.

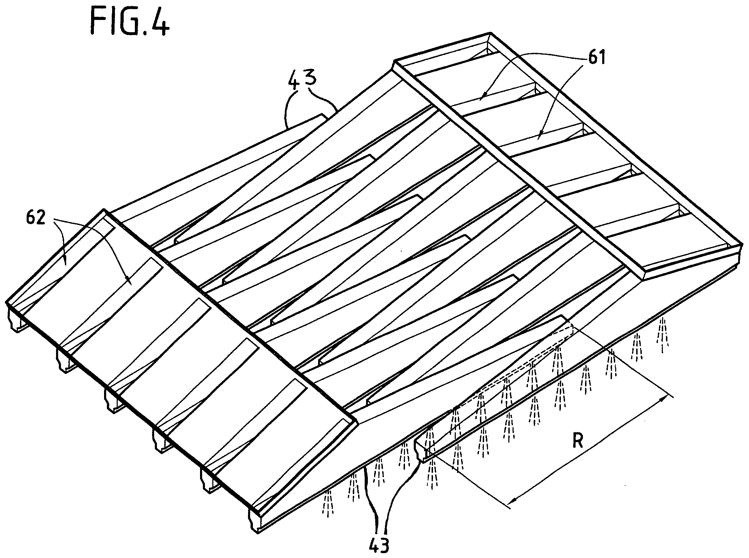

- la figure 4 est une vue en perspective d'un couple de buses disposées de façon alternative et alternées avec un pas d'une buse. Le couple de buses comprend une zone de recouvrement (R). Sur cette figure, les buses ne sont pas jointives de sorte que l'air peut circuler entre elle. Cette figure est vue du coté d'alimentation en fluide des buses. Le fluide arrivant par les conduits (51,52), passe dans les ouvertures (61,62) pour être éjecté à travers les buses (43) en direction de l'élément mince.

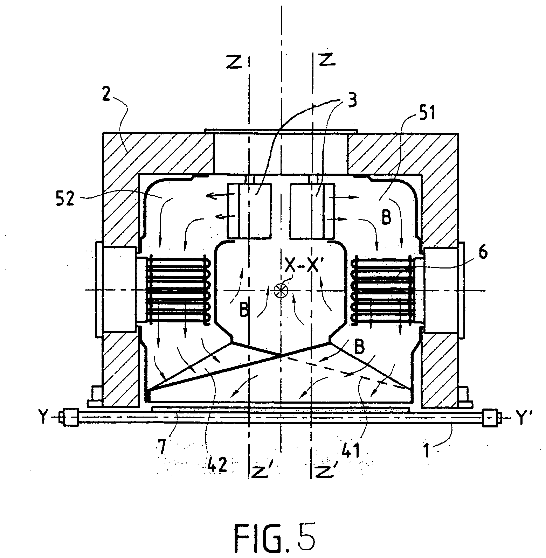

- la figure 5 est une coupe transversale simplifiée d'un mode de réalisation de l'invention comprenant deux ventilateurs ayant chacun une seule sortie radiale.

La figure 1 illustre, par une coupe transversale, les principaux éléments d'un mode de réalisation de l'invention.

La bande mince 7 se déplace perpendiculairement au plan de coupe, sur des rouleaux 1 parallèles entre eux, de tout type connu en soi, d'axe horizontal YY'.

La bande 7 traverse l'enceinte 2 parallélépipédique à l'intérieur de laquelle se trouvent les moyens constitutifs de l'invention. L'enceinte 2 peut comprendre cinq parois constituée de matériau isolant en fibres céramiques

Selon ce mode de réalisation de l'invention, la limite inférieure de l'enceinte 2 est constituée par l'ensemble des rouleaux 1 qui supportent et transportent la feuille mince 7.

Au-dessus de la bande 7 débouchent des buses 43 définies par des plaques 41, 42 parallèles entre elles de sorte que les jets de fluide projetés depuis les buses 43 vers la bande mince 7 sont contenus dans des plans « transversaux » c'est-à-dire perpendiculaires au plan de la bande 7 et à l'axe longitudinal XX' de l'enceinte 2.

Un ou plusieurs conduits d'alimentation 51, 52 relie les ailettes 41, 42 à la sortie (ou aux sorties) d'un ventilateur 3, d'axe préférentiellement vertical ZZ' situé centralement c'est-à-dire près de l'axe longitudinal XX' de l'enceinte 2.

Selon le mode de réalisation illustré par les figures 1 à 3, chaque unité de soufflage comprend un ventilateur 3 présentant deux sorties radiales diamétralement opposées qui sont chacune reliée à un conduit d'alimentation 51, 52 qui lui-même distribue le fluide à travers les ailettes 41, 42 formant les buses 43.

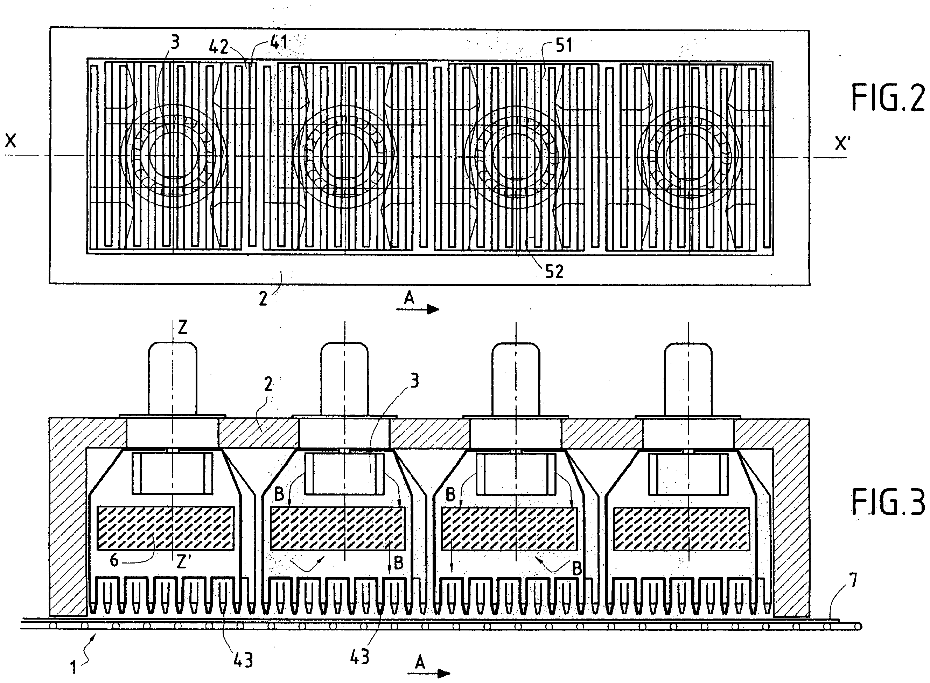

Comme il est plus lisible sur la figure 2, les plaques issues de chaque conduit 51, 52 sont disposées de façon à former des buses 43 projetant le fluide issu alternativement de l'un 51 et de l'autre 52 conduit.

Le pas entre les buses d'origine différente peut être de une ou plusieurs buses.

Par ailleurs, les buses 43 issues de chaque conduit 51, 52 peuvent présenter selon la largeur de l'enceinte une zone de recouvrement plus ou moins grande : sur les figures 1 et 2 cette zone de recouvrement est sensiblement égale à toute la largeur de l'enceinte 2 ; cet arrangement est choisi pour garantir une plus grande homogénéité.

Une zone de recouvrement plus petite peut bien entendu être prévue sans sortir du cadre de la présente invention.

Préférentiellement mais pas obligatoirement, la section de chaque conduit 51, 52 n'est pas constante; la figure 2 montre en effet une section croissante depuis chaque sortie du ventilateur jusqu'au niveau des ailettes 41, 42.

En outre, des éléments de chauffage 6 peuvent être prévus, à l'intérieur des conduits d'alimentation 51, 52. Ces moyens peuvent être de type radiatif tels que des résistances ou bien des brûleurs à gaz.

Ils peuvent être fixés sur les parois latérales de l'enceinte.

Le mouvement général du fluide à l'intérieur de l'enceinte 2 est tel qu'indiqué par les flèches B sur les figures 1 et 3.

Ce mouvement, quasi-symétrique par rapport à l'axe vertical ZZ' de chaque unité de soufflage, permet une répartition à la fois optimale et homogène du fluide sur la surface à traiter.

Par ailleurs la disposition des différents constituants, notamment les ventilateurs 3 et les moyens de chauffage 6, assurent un accès fiable facile en cas de réparation et/ou d'entretien.

Lorsque l'enceinte comprend plusieurs ventilateurs 3, il est également envisagé des moyens pour ajuster et contrôler séparément la température et/ou le débit du fluide issu de chacun des ventilateurs. Tout moyen connu en soi peut être utilisé pour cette fonction.

On obtient ainsi des profils de température particuliers et appropriés au niveau du soufflage sur la bande. Cette modularité est alors très appréciée des utilisateurs.

En outre l'invention a pour objet unité de soufflage/chauffage comprenant soit un dispositif tel que décrit ci-dessus sur chacune des faces de la bande ; soit un dispositif ci-dessus décrit qui souffle sur une face, associée à un autre moyen de soufflage et/ou de chauffe de type radiatif ou convectif sur l'autre face.

## Revendications

1. Dispositif de soufflage d'un fluide sur au moins une face d'un élément mince de type bande comprenant, à l'intérieur d'une enceinte (2) ayant un axe longitudinal horizontal (XX') correspondant à l'axe de défilement de la bande, au moins un ventilateur (3) à flux radial et à axe vertical (ZZ') ayant au moins une sortie reliée à au moins un conduit (51, 52) d'alimentation de buses (43) dirigées vers ladite face, **caractérisé en ce qu'**il comprend deux conduits (51, 52) diamétralement opposés, chaque conduit alimentant au moins une série de buses (43) parallèles transversales, les buses (43) induisant des jets de fluide dans au moins un plan perpendiculaire au sens (XX') de défilement de ladite bande.

2. Dispositif selon la revendication précédente, **caractérisé en ce que** lesdites buses (43) issues de chacun des conduits (51, 52) sont disposées de façon alternative selon l'axe longitudinal (XX') de l'enceinte (2).

3. Dispositif selon l'une quelconque des revendications précédentes, **caractérisé en ce que** les buses (43) sont alternées avec un pas d'au moins une buse.

4. Dispositif selon l'une quelconque des revendications précédentes, **caractérisé en ce que** l'axe (ZZ') dudit ventilateur (3) est disposé à proximité de l'axe longitudinal de l'enceinte (2).

5. Dispositif selon l'une quelconque des revendications précédentes, **caractérisé en ce qu'**il comprend un seul ventilateur (3) ayant deux sorties radiales (51, 52).

6. Dispositif selon la revendication précédente, **caractérisé en ce que** l'axe (ZZ') croise l'axe longitudinal (XX').

7. Dispositif selon l'une quelconque des revendications 1 à 4, **caractérisé en ce qu'**il comprend deux ventilateurs ayant chacun une sortie radiale.

8. Dispositif selon l'une quelconque des revendications précédentes, **caractérisé en ce que** la section du (ou des) conduit(s) d'alimentation (51, 52) des buses (43) n'est pas constante.

9. Dispositif selon l'une quelconque des revendications précédentes, **caractérisé en ce que** lesdites buses (43) issues de chacun des conduits (51, 52) présentent une zone de recouvrement selon tout ou partie de la largeur de l'enceinte(2).

10. Dispositif selon l'une quelconque des revendications précédentes, **caractérisé en ce que** lesdites buses (43) induisent des jets d'air dirigés perpendiculairement à la surface de l'élément mince en bande.

11. Dispositif selon l'une quelconque des revendications précédentes, **caractérisé en ce qu'**il comprend en outre des moyens (6) de chauffage du fluide dans l'enceinte (2), soit de type radiatif soit de type convectif.

12. Dispositif selon la revendication précédente, **caractérisé en ce que** les moyens de chauffage (6) sont de type radiatif et comprennent au moins une résistance électrique.

13. Dispositif selon l'une quelconque des revendications précédentes, **caractérisé en ce qu'**il comprend en outre des moyens de transfert de chaleur de type conductif avec l'élément mince.

14. Dispositif selon l'une quelconque des revendications précédentes, **caractérisé en ce que** les buses ne sont pas jointives, de sorte que l'air issu des buses peut revenir en arrière et circuler entre les buses.

15. Dispositif selon l'une quelconque des revendications précédentes, **caractérisé en ce que** l'enceinte (2) comprend plusieurs ventilateurs (3) alignés selon son axe longitudinal (XX').

16. Dispositif selon la revendication précédente, **caractérisé en ce qu'**il comprend en outre des moyens destinés à contrôler et à ajuster individuellement la température et/ou le débit du fluide issu de chaque ventilateur (3), afin d'avoir des profils de température particuliers au niveau du soufflage sur la bande mince (7).

17. Unité de soufflage d'un fluide sur les deux faces d'un élément mince de type bande, comprenant un dispositif de soufflage selon l'une quelconque des revendications 1 à 16 sur chacune des faces de l'élément mince.

18. Unité de soufflage d'un fluide sur les deux faces d'un élément mince de type bande, comprenant un dispositif de soufflage selon l'une quelconque des revendications 1 à 16 sur l'une des faces, associé à un autre moyen de soufflage et/ou de chauffe de type radiatif ou convectif sur l'autre face.

19. Unité de soufflage d'un fluide sur les deux faces d'un élément mince de type bande, comprenant un dispositif de soufflage selon l'une quelconque des revendications 1 à 16 sur l'une des faces, associé à un autre moyen de transfert de chaleur sur l'autre face de type conductif.

## Patentansprüche

1. Vorrichtung zum Blasen eines Fluids auf wenigstens eine Seite eines dünnen bandartigen Elements, die innerhalb einer Kammer (2) mit einer horizontalen Längsachse (XX'), die der Ablaufachse des Bandes entspricht, wenigstens ein Gebläse (3) mit Radialstrom und mit vertikaler Achse (ZZ') umfasst, das wenigstens einen Auslass besitzt, der mit wenigstens einer Leitung (51, 52) zur Versorgung von Düsen (43) verbunden ist, die zu der Seite hin gerichtet sind, **dadurch gekennzeichnet, dass** sie zwei diametral entgegengesetzte Leitungen (51, 52) umfasst, wobei jede Leitung wenigstens eine Reihe von parallelen, quer angeordneten Düsen (43) versorgt, wobei die Düsen (43) Fluidstrahlen in wenigstens einer Ebene senkrecht zur Ablaufrichtung (XX') des Bandes bewirken.

2. Vorrichtung nach dem vorhergehenden Anspruch, **dadurch gekennzeichnet, dass** die aus jeder der Leitungen (51, 52) kommenden Düsen (43) entlang der Längsachse (XX') der Kammer (2) abwechselnd angeordnet sind.

3. Vorrichtung nach einem der vorhergehenden Ansprüche, **dadurch gekennzeichnet, dass** die Düsen (43) einander mit einer Schrittweite von wenigstens einer Düse abwechseln.

4. Vorrichtung nach einem der vorhergehenden Ansprüche, **dadurch gekennzeichnet, dass** die Achse (ZZ') des Gebläses (3) in der Nähe der Längsachse der Kammer (2) angeordnet ist.

5. Vorrichtung nach einem der vorhergehenden Ansprüche, **dadurch gekennzeichnet, dass** sie ein einziges Gebläse (3) umfasst, das zwei radiale Auslässe (51, 52) besitzt.

6. Vorrichtung nach dem vorhergehenden Anspruch, **dadurch gekennzeichnet, dass** die Achse (ZZ') die Längsachse (XX') kreuzt.

7. Vorrichtung nach einem der Ansprüche 1 bis 4, **dadurch gekennzeichnet, dass** sie zwei Gebläse umfasst, die jeweils einen radialen Auslass besitzen.

8. Vorrichtung nach einem der vorhergehenden Ansprüche, **dadurch gekennzeichnet, dass** der Querschnitt der Versorgungsleitung(en) (51, 52) der Düsen (43) nicht konstant ist.

9. Vorrichtung nach einem der vorhergehenden Ansprüche, **dadurch gekennzeichnet, dass** die aus jeder der Leitungen (51, 52) kommenden Düsen (43) einen Überlappungsbereich entlang der gesamten Breite oder eines Teils der Breite der Kammer (2) aufweisen.

10. Vorrichtung nach einem der vorhergehenden Ansprüche, **dadurch gekennzeichnet, dass** die Düsen (43) Luftstrahlen bewirken, die senkrecht zur Oberfläche des dünnen bandförmigen Elements gerichtet sind.

11. Vorrichtung nach einem der vorhergehenden Ansprüche, **dadurch gekennzeichnet, dass** sie ferner Mittel (6) zum Erhitzen des Fluids in der Kammer (2) umfasst, die entweder radiativ oder konvektiv ausgeführt sind.

12. Vorrichtung nach dem vorhergehenden Anspruch, **dadurch gekennzeichnet, dass** die Erhitzungsmittel (6) radiativ ausgeführt sind und wenigstens einen elektrischen Widerstand umfassen.

13. Vorrichtung nach einem der vorhergehenden Ansprüche, **dadurch gekennzeichnet, dass** sie ferner konduktiv ausgeführte Mittel zur Übertragung von Wärme an das dünne Element umfasst.

14. Vorrichtung nach einem der vorhergehenden Ansprüche, **dadurch gekennzeichnet, dass** die Düsen nicht aneinander anliegen, so dass die aus den Düsen kommende Luft zurückströmen und zwischen den Düsen zirkulieren kann.

15. Vorrichtung nach einem der vorhergehenden Ansprüche, **dadurch gekennzeichnet, dass** die Kammer (2) mehrere Gebläse (3) umfasst, die entlang ihrer Längsachse (XX') fluchten.

16. Vorrichtung nach dem vorhergehenden Anspruch, **dadurch gekennzeichnet, dass** sie ferner Mittel umfasst, die dazu bestimmt sind, die Temperatur und/oder den Volumenstrom des aus jedem Gebläse (3) kommenden Fluids individuell zu überwachen und anzupassen, um besondere Temperaturprofile auf der Ebene des Blasens auf das dünne Band (7) zu erhalten.

17. Einheit zum Blasen eines Fluids auf die beiden Seiten eines dünnen bandartigen Elements, die eine Vorrichtung zum Blasen nach einem der Ansprüche 1 bis 16 auf jede der Seiten des dünnen Elements umfasst.

18. Einheit zum Blasen eines Fluids auf die beiden Seiten eines dünnen bandartigen Elements, die eine Blasvorrichtung nach einem der Ansprüche 1 bis 16 auf einer der Seiten umfasst, die mit einem anderen Blasmittel und/oder radiativ oder konvektiv ausgeführten Erhitzungsmittel auf der anderen Seite kombiniert ist.

19. Einheit zum Blasen eines Fluids auf die beiden Seiten eines dünnen bandartigen Elements, die eine Vorrichtung zum Blasen nach einem der Ansprüche 1 bis 16 auf eine der Seiten umfasst, die mit einem anderen konduktiv ausgeführten Mittel zur Übertragung von Wärme auf die andere Seite kombiniert ist.

## Claims

1. Device for blowing a fluid onto at least one face of a thin element of the band type, comprising, within a containment (2) having a horizontal longitudinal axis (XX') corresponding to the axis of travel of the band, at least one radial-flow fan (3) with a vertical axis (ZZ'), having at least one outlet connected to at least one pipe (51, 52) for feeding nozzles (43) directed towards the said face, **characterized in that** it comprises two diametrically opposite pipes (51, 52), each pipe feeding at least one series of transverse parallel nozzles (43), the nozzles (43) inducing fluid jets in at least one plane perpendicular to the direction (XX') of travel of the said band.

2. Device according to preceding claim , **characterized in that** the said nozzles (43) originating from each of the pipes (51, 52) are arranged alternately along the longitudinal axis (XX') of the containment (2).

3. Device according to any one of the preceding claims, **characterized in that** the nozzles (43) alternate with a pitch of at least one nozzle.

4. Device according to any one of the preceding claims, **characterized in that** the axis (ZZ') of the said fan (3) is arranged in the vicinity of the longitudinal axis of the containment (2).

5. Device according to any one of the preceding claims, **characterized in that** it comprises a single fan (3) having two radial outlets (51, 52).

6. Device according to preceding claim , **characterized in that** the axis (ZZ') intersect the longitudinal axis (XX').

7. Device according to any one of Claims 1 to 4, **characterized in that** it comprises two fans, each having one radial outlet.

8. Device according to any one of the preceding claims, **characterized in that** the cross section of the pipe (or pipes) (51, 52) for feeding the nozzles (43) is not constant.

9. Device according to any one of preceding claims , **characterized in that** the said nozzles (43) originating from each of the pipes (51, 52) have an overlap zone over all or part of the width of the containment (2).

10. Device according to any one of the preceding claims, **characterized in that** the said nozzles (43) induce air jets directed perpendicularly to the surface of the thin band element.

11. Device according to any one of the preceding claims, **characterized in that** it comprises, furthermore, means (6) for heating the fluid in the containment (2), either of the radiant type or of the convective type.

12. Device according to the preceding claim, **characterized in that** the heating means (6) are of the radiant type and comprise at least one electrical resistor.

13. Device according to any one of the preceding claims, **characterized in that** it comprises, furthermore, means for the transfer of heat of the conductive type with the thin element.

14. Device according to any one of the preceding claims, **characterized in that** the nozzles are not contiguous, so that the air emanating from the nozzles can flow back rearwards and circulate between the nozzles.

15. Device according to any one of the preceding claims, **characterized in that** the containment (2) comprises a plurality of fans (3) aligned along its longitudinal axis (XX').

16. Device according to the preceding claim, **characterized in that** it comprises, furthermore, means intended for individually controlling and adjusting the temperature and/or the flow rate of the fluid emanating from each fan (3), in order to have particular temperature profiles in the region of blowing on the thin band (7).

17. Unit for blowing a fluid onto the two faces of a thin element of the band type, comprising a blowing device according to any one of Claims 1 to 16 arranged on both faces of the thin element.

18. Unit for blowing a fluid onto the two faces of a thin element of the band type, comprising a blowing device according to any one of Claims 1 to 16 on one of the faces, associated with another blowing and/or heating means of the radiant or convective type on the other face.

19. Unit for blowing a fluid onto the two faces of a thin element of the band type, comprising a blowing device according to any one of Claims 1 to 16 on one of the faces, associated with another means for the transfer of heat of the conductive type on the other face.
